# FASCICULE DE BREVET EUROPEEN

(11) **EP 1 760 281 B1**
(45) Date de publication et mention de la délivrance du brevet: **26.11.2008**
(21) Numéro de dépôt: 06300828.8
(22) Date de dépôt: 25.07.2006
(51) Int. Cl.: F01N 3/035, B01D 53/94

(54) **Ligne d'échappement et de purification des gaz d'échappement d'un moteur de véhicule automobile et véhicule comportant une telle ligne**
Abgas- und Abgasreinigungsstrang einer Dieselbrennkraftmaschine für ein Fahrzeug und Fahrzeug mit einem solchen Strang
Exhaust line and exhaust gas purification line for an engine of an automotive vehicle and vehicle with such a line

(30) Priorité: 29.08.2005 FR 0552585
(43) Date de publication de la demande: 07.03.2007
(73) Titulaire: PEUGEOT CITROËN AUTOMOBILES S.A., 78140 Velizy Villacoublay (FR)
(72) Inventeur: Guerin, Stéphane, 92250 La Garenne Colombes (FR)
(74) Mandataire: Ménès, Catherine

(56) Documents cités:
- EP-A- 0 050 340
- EP-A- 0 617 199
- EP-A- 1 270 887
- EP-A- 1 308 200
- EP-A- 1 338 770
- DE-A1- 3 012 182
- US-A- 5 328 774
- US-A1- 2001 001 647

## Description

La présente invention concerne une ligne d'échappement et de purification des gaz d'échappement d'un moteur thermique de véhicule automobile, en particulier d'un moteur du type Diesel, et un véhicule équipé d'une telle ligne d'échappement et de purification.

Les gaz d'échappement des moteurs à combustion interne, tels notamment ceux qui équipent la plupart des véhicules automobiles, renferment un certain nombre de polluants dont il est souhaitable de réduire les rejets dans l'atmosphère. Les réglementations applicables en matière de pollution par des véhicules automobiles tendent d'ailleurs vers des plafonds d'émissions acceptables de plus en plus bas.

Une grande partie des polluants générés par un moteur automobile sont dus à une combustion plus ou moins incomplète du carburant. Ceci explique que de nombreux constructeurs tendent vers l'utilisation de mélanges air/carburant dits pauvres, c'est-à-dire comportant un excès d'air par rapport aux conditions stoechiométriques.

En dehors des technologies visant en amont à la réduction de la quantité de gaz nocifs dirigés vers la ligne d'échappement, des technologies de post-traitement sont également mises systématiquement en oeuvre.

Pour réduire les émissions de polluants, la plupart des véhicules sont aujourd'hui équipés d'un convertisseur catalytique, constitué par un boîtier, monté dans la ligne d'échappement, qui renferme un substrat pourvu d'un revêtement actif. Le substrat est généralement constitué par un corps monolithique métallique ou le plus souvent céramique. Les composants essentiels des monolithes céramiques peuvent être de l'alumine et des alumino-silicates éventuellement dopés par de la zircone (cordiérite, mullite, mullite-zircone).

Ce substrat est muni d'un revêtement actif composé d'alumine, de cérine et d'autres oxydes ainsi que de métaux précieux combinés: platine, palladium et rhodium.

Le monolithe comporte des canaux dans le prolongement longitudinal de la ligne d'échappement de sorte que les gaz d'échappement circulent dans ces canaux imprégnés du revêtement catalytique. Des structures de type nid d'abeille permettent de définir un très grand nombre de canaux avec des épaisseurs de parois très fines. Pour les convertisseurs catalytiques, la densité de canaux (ou cellules) varie d'environ 200 cellules par pouce carré (cpsi: acronyme pour le terme anglo-saxon « channel per square inch) soit environ 31 cellules par centimètre carré avec une épaisseur de paroi de 0,012 pouce (0,305 mm) pour les systèmes les moins performants à environ 1000 cpsi, soit environ 150 cellules par centimètre carré avec une épaisseur de paroi de seulement 0,025 mm ; les convertisseurs catalytiques commerciaux courants comportant 400, 600 ou 900 cpsi, (respectivement 62, 93 ou 139 cpcm²).

Dans les convertisseurs catalytiques dits d'oxydation, le monoxyde de carbone et les hydrocarbures sont convertis en dioxyde de carbone et en eau. Les convertisseurs catalytiques dits trois voies, qui opèrent dans un système à boucle, permettent à la fois la conversion par oxydation du monoxyde de carbone et des hydrocarbures imbrûlés et la conversion des oxydes d'azote NOx par réduction. En brûlant la partie organique, ces convertisseurs permettent de plus de diminuer la masse des particules émises mais non leur nombre, ce qui est particulièrement gênant dans le cas des motorisations Diesel qui émettent un grand nombre de particules.

Donc, pour les véhicules avec une motorisation Diesel, la dépollution complète suppose de plus le piégeage des particules solides ou liquides, constituées essentiellement de suies et de gouttelettes d'huile. Ce piégeage est réalisé au moyen d'un filtre disposé dans la ligne d'échappement. Pour éviter l'encrassement du filtre, celui-ci doit être régénéré de temps en temps par brûlage des particules piégées.

Pour cette régénération, une post-injection de carburant est effectuée par exemple pendant la phase de détente du piston, de sorte que temporairement, les gaz d'échappement sont enrichis en carburant imbrûlé qui peut donc s'enflammer dans la ligne d'échappement. La température moyenne des gaz d'échappement n'est toutefois normalement pas suffisante pour provoquer cette inflammation, imposant la mise en place d'artifices qui visent d'une part à abaisser la température d'inflammation dans le filtre à particules (soit par imprégnation du filtre avec un matériau catalytique tel que des métaux précieux, soit en ajoutant au carburant un additif, notamment un composé organométallique, qui vient se déposer avec les particules et qui permet à la fois d'abaisser la température d'inflammation et d'aider à la propagation de la flamme) et d'autre part à augmenter la température des gaz d'échappement. En pratique, le filtre à particules est ainsi monté juste en aval du convertisseur catalytique afin de tirer profit de la réaction exothermique d'oxydation dans ce convertisseur.

Placé en amont du filtre à particules, le convertisseur catalytique reçoit des gaz d'échappement non épurés, riches en particules relativement grasses qui risquent de colmater les canaux et d'endommager le convertisseur. Pour minimiser ce risque, les constructeurs équipent de ce fait les véhicules Diesel de convertisseurs catalytiques présentant une densité de canaux relativement faibles, typiquement d'au plus 400 cpsi (62 cpcm²), ce qui conduit à un ensemble de performances excellentes pour ce qui concerne la réduction des émissions de particules mais seulement moyennes pour le monoxyde de carbone (du moins comparativement à d'autres motorisations, à supposer bien sûr que celles-ci soient équipées pour leur part de convertisseurs de toute dernière génération).

Le document US 2001/0001647 décrit un système comportant deux convertisseurs catalytiques en série, présentant des densités de cellules différentes.

Il serait donc souhaitable d'améliorer les systèmes de dépollution sur les lignes d'échappement de moteurs Diesel pour améliorer les performances au niveau de la réduction des émissions de monoxyde de carbone et d'hydrocarbures tout en permettant d'assurer une bonne filtration des particules et une régénération du filtre à particules dans de bonnes conditions.

Selon l'invention, ce problème est résolu par une ligne d'échappement comportant successivement (depuis le collecteur d'échappement du moteur) un premier convertisseur catalytique dont le substrat présente une densité de canaux relativement faible, un filtre à particules et un second convertisseur catalytique dont le substrat présente une densité de canaux élevée. Comme le second convertisseur est placé en aval du filtre à particules, il n'y a plus de risque de colmatage des canaux ce qui permet de choisir un convertisseur très performant.

Selon un mode de réalisation préféré de l'invention, le premier convertisseur catalytique comporte un substrat monolithique comportant une densité de canaux inférieure à environ 500 cpsi (77 cpcm²) alors que le second convertisseur catalytique comporte une densité de canaux supérieure à 800 cpsi (124 cpcm²), et de préférence encore supérieure à 900 cpsi (139 cpcm²).

Pour éviter les pertes de charge trop importantes, le premier convertisseur catalytique présente de préférence une épaisseur de paroi relativement faible, par exemple inférieure à 0,1 mm et de préférence encore à 0,05 mm.

D'autres détails et caractéristiques avantageuses de l'invention ressortent de la description faite ci-après en référence aux dessins annexés qui représentent :

Figure 1 : un schéma, selon l'art antérieur, d'implantation d'un filtre à particules dans une ligne d'échappement d'un véhicule équipé d'un moteur Diesel ;

Figure 2 : un schéma, selon l'invention, d'implantation d'un filtre à particules dans une ligne d'échappement d'un véhicule équipé d'un moteur Diesel ;

Figure 3 : une courbe illustrant les performances de différents convertisseurs catalytiques pour l'oxydation du monoxyde de carbone en fonction de la densité de canaux et de l'épaisseur de parois ;

Figure 4 : une courbe illustrant les performances de différents convertisseurs catalytiques pour l'oxydation des hydrocarbures en fonction de la densité de canaux et de l'épaisseur de parois ; et

Figure 5 : une courbe illustrant les performances de différents convertisseurs catalytiques pour la réduction du monoxyde d'azote en fonction de la densité de canaux et de l'épaisseur de parois.

Comme déjà mentionné, l'invention concerne la purification des gaz d'échappement d'un moteur thermique de véhicules automobiles équipés d'un moteur Diesel et dont la ligne d'échappement est munie d'un filtre à particules.

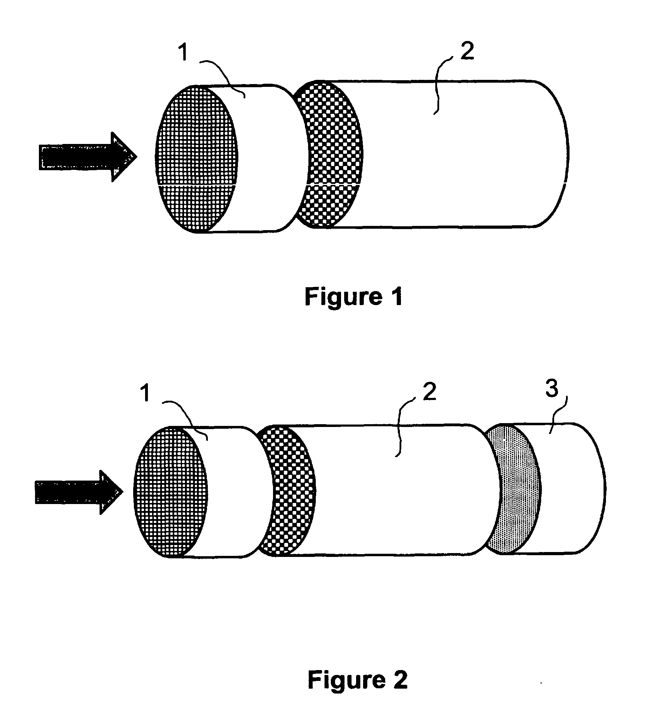

A la figure 1, on a représenté de façon schématique l'implantation traditionnelle du filtre à particules 1, juste en aval du convertisseur catalytique 2 (la notion d'amont et d'aval étant définie par rapport au sens général d'écoulement des gaz d'échappement). Le convertisseur catalytique reçoit de ce fait des gaz non épurés, riches en particules solides plus ou moins grasses (contamination par l'huile de lubrification du moteur).

Comme expliqué plus haut, pour éviter la détérioration du convertisseur catalytique 2 due au colmatage des canaux par ces particules, les canaux du convertisseur catalytique 2 doivent être relativement larges, ce qui conduit nécessairement à des densités de canaux relativement faibles qui ne permettent pas d'atteindre les plus hauts niveaux de performance au niveau de la réduction des émissions notamment de monoxyde de carbone..

Dans le mode de réalisation conforme à l'invention et tel qu'illustré figure 2, un second convertisseur catalytique 3 est ajouté à la ligne d'échappement, en aval du filtre à particules 1.

Le second convertisseur catalytique étant placé en aval du filtre, il reçoit un fluide essentiellement constitué de gaz, et peut donc comporter une densité de canaux importante. Pour fixer les idées et en référence aux modèles de convertisseurs catalytiques disponibles sur le marché, un convertisseur catalytique de 900 cpsi (139 cpcm²)pourra ainsi être associé à un convertisseur catalytique de 400 cpsi (62 cpcm²).

A l'évidence, le schéma d'implantation selon l'invention n'entraîne aucune dégradation des performances du premier convertisseur catalytique ni du filtre à particules (y compris lors des phases de régénération).

Par contre le second convertisseur catalytique permet une amélioration du traitement du monoxyde de carbone et des hydrocarbures imbrûlés, même si ce second convertisseur est nécessairement un peu éloigné du collecteur des gaz d'échappement et que par conséquent, les gaz sont légèrement refroidis à son niveau de sorte qu'en particulier au démarrage du véhicule, la montée en performance (vitesse de réchauffage) du second convertisseur est relativement lente.

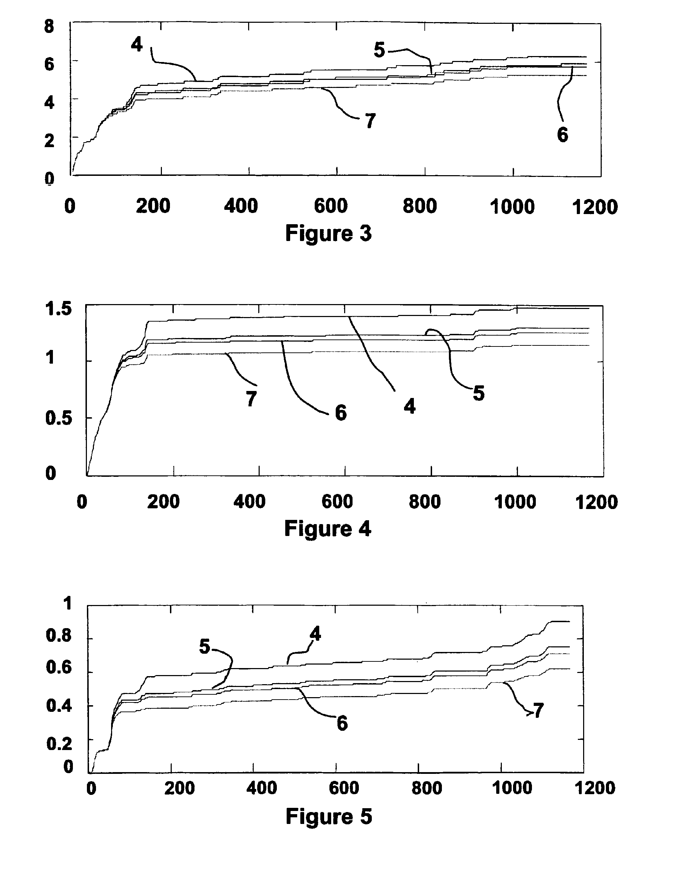

Ces performances améliorées sont illustrées notamment à l'aide des figures 3 à 5. La figure 3 montre les émissions cumulées de monoxyde de carbone au cours d'un test des gaz d'échappement (avec en abscisse le temps écoulé, en secondes et en ordonnées, la masse de monoxyde de carbone en grammes). La courbe 4 correspond aux performances obtenues avec un convertisseur catalytique dont le substrat présente une densité de 400 cpsi, avec une épaisseur de parois de 6,5 millièmes de pouce (ou exprimé dans le système métrique, environ 62 canaux par centimètre carré et des parois d'environ 0,16 millimètres). La courbe 5 correspond à un convertisseur catalytique ayant une densité de 600 cpsi et des parois de 3,5 6,5 millièmes de pouce (93 canaux par centimètre carré, 0,09 millimètres). Les courbes 6 et 7 sont obtenues avec des convertisseurs catalytiques présentant tous deux une densité de 900 cpsi (environ 140 canaux par centimètre carré) et des épaisseurs de parois respectivement de 2,5 millièmes de pouce (0,06 millimètres) et 1,5 millièmes de pouce 0,038 millimètres).

La figure 5 est analogue à la figure 4, l'axe des ordonnées correspondant cette fois à la masse cumulée de particules d'hydrocarbures. La figure 6 est analogue aux figures 4 et 5, l'axe des ordonnées correspondant à la masse cumulée des monoxydes d'azote.

Ces figures mettent clairement en évidence un accroissement des performances lorsque la densité des convertisseurs catalytiques augmente, avec de plus pour les catalyseurs avec des parois très fines une montée en puissance plus rapide (ce qui permet de compenser au moins partiellement le retard de montée en température au démarrage du véhicule).

Dans le cas particulier de la présente invention, il doit être de plus souligné que le second convertisseur catalytique a de plus un rôle tout particulier au moment des phases de régénération (phases qui sont de toute façon déclenchée lorsque la charge du moteur est relativement grande, comme par exemple lorsque le véhicule roule à vitesse élevée sur autoroute, c'est-à-dire par définition à un moment où la montée en température du convertisseur catalytique est achevée). Ainsi, comme un traitement en aval du filtre à particules est assuré, il est possible de « sur-doser » l'injection complémentaire de carburant pour augmenter la température dans le filtre à particules, les émissions d'hydrocarbures imbrûlés qui peuvent en résulter étant de toute façon réduites par le convertisseur aval. Dans ces conditions, il est possible de réduire (voire de supprimer) la quantité d'additif d'aide à la régénération.

Par ailleurs, le convertisseur catalytique en aval du filtre à particules assure le traitement du monoxyde de carbone éventuellement produit lors de la combustion des suies pendant la régénération du filtre à particules.

L'adjonction d'un second convertisseur catalytique permet ainsi non seulement d'améliorer les performances de la ligne d'échappement en phase « ordinaire » mais aussi pendant les phases de régénération du filtre à particules.

## Revendications

1. Ligne d'échappement et de purification des gaz d'échappement d'un moteur Diesel de véhicule automobile comportant successivement (1) depuis le collecteur d'échappement du moteur, un premier convertisseur catalytique (1) dont le substrat présente une densité de canaux relativement faible, un filtre à particules (2) et un second convertisseur catalytique (3) dont le substrat présente une densité de canaux plus élevée que celle du premier convertisseur catalytique.

2. Ligne selon la revendication 1, **caractérisée en ce que** le premier convertisseur catalytique (1) présente une densité d'au plus 500 cpsi (77cpcm²).

3. Ligne d'échappement selon l'une quelconque des revendications précédentes, **caractérisée en ce que** le second convertisseur catalytique (3) présente une densité d'au moins 800 cpsi (124 cpcm²).

4. Ligne selon la revendication 3, **caractérisée en ce que** le second convertisseur catalytique (3) présente une densité d'au moins 900 cpsi (139 cpcm²).

5. Véhicule équipé d'une motorisation Diesel et d'une ligne d'échappement et de purification des gaz d'échappement selon l'une quelconque des revendications précédentes.

6. Véhicule selon la revendication 5 comportant un réservoir d'additif ajouté au carburant et destiné à favoriser la régénération du filtre à particules (2).

## Claims

1. Motor vehicle diesel engine exhaust gas exhaust and purification line comprising, in succession, from the engine exhaust manifold, a first catalytic converter (1) the substrate of which has a relatively low cell density, a particulate filter (2) and a second catalytic converter (3) the substrate of which has a cell density higher than that of the first catalytic converter.

2. Line according to Claim 1, **characterized in that** the first catalytic converter (1) has a density of at most 500 cpsi (77 cpcm²).

3. Exhaust line according to either one of the preceding claims, **characterized in that** the second catalytic converter (3) has a density of at least 800 cpsi (124 cpcm²).

4. Line according to Claim 3, **characterized in that** the second catalytic converter (3) has a density of at least 900 cpsi (139 cpcm²).

5. Vehicle equipped with a diesel power plant and with an exhaust gas exhaust and purification line according to any one of the preceding claims.

6. Vehicle according to Claim 5 comprising a tank of additive added to the fuel and intended to encourage the regeneration of the particulate filter (2).

## Patentansprüche

1. Abgas- und Abgasreinigungsstrang eines Dieselmotors für ein Kraftfahrzeug, der nacheinander von dem Abgaskrümmer des Motors einen ersten Katalysator (1), dessen Träger eine relativ geringe Kanaldichte aufweist, einen Teilchenfilter (2) und einen zweiten Katalysator (3), dessen Träger eine höhere Kanaldichte als die des ersten Katalysators aufweist, umfasst.

2. Strang nach Anspruch 1, **dadurch gekennzeichnet, dass** der erste Katalysator (1) eine Dichte von über 500 cpsi (77 cpcm²) aufweist.

3. Strang nach einem der vorhergehenden Ansprüche, **dadurch gekennzeichnet, dass** der zweite Katalysator (3) eine Dichte von weniger als 800 cpsi (124 cpsm²) aufweist.

4. Strang nach Anspruch 3, **dadurch gekennzeichnet, dass** der zweite Katalysator (3) eine Dichte von weniger als 900 cpsi (139 cpcm² aufweist).

5. Mit einem Dieselmotorsystem und einem Abgas- und Abgasreinigungsstrang nach einem der vorhergehenden Ansprüche ausgestattetes Fahrzeug.

6. Fahrzeug nach Anspruch 5 mit einem Behälter für dem Kraftstoff zugesetztes Additiv, das die Regeneration des Teilchenfilters (2) begünstigen soll.
